# EUROPÄISCHE PATENTANMELDUNG

(11) **EP 4 300 327 A1**
(43) Veröffentlichungstag der Anmeldung: **03.01.2024**
(21) Anmeldenummer: 22182019.4
(22) Anmeldetag: 29.06.2022
(51) Int. Cl.: G06F 16/901

(54) **VERFAHREN ZUM BEREITSTELLEN VON DATEN EINES AUTOMATISIERUNGSSYSTEMS, SUCHVERFAHREN ZUR ERMITTLUNG VON DATEN EINES AUTOMATISIERUNGSSYSTEMS, COMPUTERPROGRAMM, COMPUTERLESBARES MEDIUM UND VORRICHTUNG ZUR DATENVERARBEITUNG**

(71) Anmelder: Siemens Aktiengesellschaft, 80333 München (DE)
(72) Erfinder: Eckl, Roland, 91301 Forchheim (DE); Montag, Axel, 76889 Kapsweyer (DE)
(74) Vertreter: Siemens Patent Attorneys

(57) **Zusammenfassung**

Verfahren zum Bereitstellen von Daten eines Automatisierungssystems, Suchverfahren zur Ermittlung von Daten eines Automatisierungssystems, Computerprogramm, computerlesbares Medium und Vorrichtung zur Datenverarbeitung

Die Erfindung betrifft ein Verfahren zum Bereitstellen von Daten eines Automatisierungssystems (12) für Suchabfragen, bei dem
S1) von einem Datenlieferanten (13) gelieferte Daten des in einer Graphdatenbank (2) gespeichert werden oder worden sind,
S2) ein Datenbankindex (16) bereitgestellt wird, der zumindest für einen Teil von Knoten-Kante-Paaren bzw. Knoten-Kante-Knoten-Tripeln (9-11) der Graphdatenbank (2) einen direkten Zugriff auf diese Knoten-Kante-Paare bzw. Knoten-Kante-Knoten-Tripel (9-11) ermöglicht,
S3) für den Fall, dass eine Aktualisierung eines in dem Datenbankindex (16) berücksichtigten Knoten-Kante-Paares bzw. Knoten-Kante-Knoten-Tripels (9-11) der Graphdatenbank (2) erforderlich ist, weil eine Änderung zugehöriger Daten des Automatisierungssystems (12) auftrat, unter Verwendung des Datenbankindexes (16) eine direkte Referenz auf das Knoten-Kante-Paar bzw. Knoten-Kante-Knoten-Tripel (9-11) erhalten und dieses aktualisiert wird.

Darüber hinaus betrifft die Erfindung ein Suchverfahren zur Ermittlung von Daten eines Automatisierungssystems, ein Computerprogramm, ein computerlesbares Medium sowie eine Vorrichtung zur Datenverarbeitung.

## Beschreibung

Verfahren zum Bereitstellen von Daten eines Automatisierungssystems, Suchverfahren zur Ermittlung von Daten eines Automatisierungssystems, Computerprogramm, computerlesbares Medium und Vorrichtung zur Datenverarbeitung

Die Erfindung betrifft ein Verfahren zum Bereitstellen von Daten eines Automatisierungssystems für Suchabfragen. Darüber hinaus betrifft die Erfindung ein Suchverfahren zur Ermittlung von Daten eines Automatisierungssystems, ein Computerprogramm, ein computerlesbares Medium sowie eine Vorrichtung zur Datenverarbeitung.

Eine Graphdatenbank (oder graphenorientierte Datenbank) ist eine Datenbank, die Graphen benutzt, um stark vernetzte Informationen darzustellen und abzuspeichern. Ein solcher Graph besteht aus Knoten und Kanten, den Verbindungen zwischen den Knoten. Beispiele für Graphdatenbanken sind das Resource Description Framework (RDF) und Labeled-Property Graph (LPG).

Solche Datenbanken werden heute primär für das Abbilden von Wissen (Knowledge - daher werden Graphdatenbanken oft auch als Knowledge-Graph bezeichnet) verwendet, welches in Form von Kanten und Knoten abgespeichert wird. Insbesondere bei RDF spricht man hierbei von so genannten Tripeln (englisch: Triples), welche aus zwei Knoten und einer Kante gebildet werden: Subjekt [Knoten] -> Prädikat [Kante] -> Objekt [Knoten] .

Einfache Beispiele für solche Tripel können gegeben sein durch
("A", "kennt", "B")
("A", "kennt", "C")
("B", "kennt", "PC")

Mit den Personen "A", "B" und "C". Person "B" ist in diesem sehr einfachen Graphen sowohl Objekt als auch Subjekt. Das einzig verwendete Prädikat ist "kennt". Auf einer solchen Graphdatenbank kann nun geschlussfolgert werden. Etwa "Wer kennt C?" (dies wären sowohl Person "A" als auch "B") oder "Wer kennt B?" (das wäre nur Person "A").

Graphdatenbanken werden in der Regel aus einem großen Datenbestand eingelesen, etwa in Form eines sogenannten Turtle-Files. Ein Beispiel für ein Turtle-File zu dem Graphen mit den obigen drei Tripeln wäre:
@prefix rdf: <http://www.w3.org/1999/02/22-rdf-syntax-ns#>.
@prefix rdfs: <http://www.w3.org/2000/01/rdf-schema#>.
@prefix xsd: <http://www.w3.org/2001/XMLSchema#>.
@prefix person: <http://person/>.
@prefix predicate: <http://predicate/>.
person:B predicate:knows person:C.
person:A predicate:knows person:B,
   person:C.

Graphdatenbanken können über bestimmte Schnittstellen abgefragt (vgl. oben erwähntes Schlussfolgern) oder manipuliert (sprich Knoten hinzugefügt oder entfernt) werden.

Eine solche standardisierte Schnittstelle stellt etwa SPARQL (SPARQL Protocol And RDF Query Language) dar, welche eine Abfragesprache konkret für RDF Graphdatenbanken ist. Jedoch werden auch hier im Grunde über die Abfrage Schlussfolgerungen getroffen (indem sozusagen eine Query/Suche ausgeführt wird), auf deren Ergebnis dann erst zur Änderung ausgeführt wird.

Nehmen wir an, ein Graph enthält neben unzähligen weiteren Knoten folgendes sehr einfaches Tripel:
("Object", "hasValue", "42")

Um den Wert zu ändern, z.B. von 42 auf 43 zu erhöhen, muss eine Anfrage zuerst das entsprechende Tripel identifizieren. Danach wird dieses Tripel entfernt und für den Knoten "Objekt" ein neues Tripel
("Object", "hasValue", "43") eingefügt.

Da Aktualisierungen von Werten somit implizit immer mit einer Suche des entsprechenden Tripels einhergehen, ist das Aktualisieren von Werten in Graphdatenbanken langsam.

In der Regel werden Graphdatenbanken für "Big Data"-Szenarien und das Identifizieren von Zusammenhängen verwendet. Dennoch sind ihre Abfragefähigkeiten auch sehr interessant für jede Art von Query auf Information.

Der Import von Graphen und das typische Verfahren, um Graphen zu erweitern oder in seltenen Fällen auch zu verändern, legen bereits nahe, dass Graphdatenbanken nicht ideal darauf ausgerichtet sind, neben quasi-statischer Modell-Information (z.B. "A", "kennt", "B") auch mit dynamischen, sich also kontinuierlich ändernden, Aktual-Werten zu hantieren. Die vorbekannten Lösungen adressieren statische Modelle, die nur selten bis gar nicht Änderungen unterliegen. In diesem Falle kann der Import von serialisierten Modellen und der Zugriff über Query Interfaces für Aktualisierungen ausreichend sein.

Im Bereich der industriellen Automatisierung treten sich dynamisch ändernde Aktual-Werte vielfach auf, können insbesondere in Form von sich während des Betriebes dynamisch ändernden Prozessdaten vorliegen. Graphdatenbanken wären prinzipiell auch interessant, um Daten aus dem Bereich der industriellen Automatisierung zu speichern und Schlussfolgerungen bzw. Abfragen auf diese zu ermöglichen. Die Abfragefähigkeiten zugehöriger standardisierter Schnittstellen, wie etwas SPARQL, wären auch für den Bereich der industriellen Automatisierung sehr interessant.

Die vorbekannten Graphdatenbanken sind jedoch nicht dafür ausgelegt, mit kontinuierlichen Wert-Aktualisierungen zu hantieren. Das Aktualisieren über öffentliche Schnittstellen dauert vergleichsweise lange und erlaubt daher nur eine sehr geringe Anzahl von Aktualisierungen, was nicht genügt, um beispielsweise ein Prozessabbild einer industriellen Automatisierungsanlage hinreichend abzubilden.

Ausgehend davon ist es eine Aufgabe der vorliegenden Erfindung, eine Möglichkeit zu schaffen, die Vorteile von Graphdatenbanken, insbesondere deren guten Abfragefähigkeiten, für den Bereich der industriellen Automatisierung nutzbar zu machen, und zwar auch für den Fall, dass sich dynamisch verändernde Werte zu berücksichtigen sind.

Diese Aufgabe wird gelöst durch ein Verfahren zum Bereitstellen von Daten eines Automatisierungssystems für Suchabfragen, bei dem
S1) von einem Datenlieferanten, insbesondere wenigstens einem OPC UA Server, gelieferte Daten des Automatisierungssystems in einer Graphdatenbank, insbesondere einer RDF- oder OWL- oder LPG-Graphdatenbank, gespeichert werden oder worden sind, wobei die Graphdatenbank wenigstens einen Knoten und Kanten aufweisenden Graphen umfasst,
S2) ein Datenbankindex bereitgestellt wird, der zumindest für einen Teil von Knoten-Kante-Paaren bzw. Knoten-Kante-Knoten-Tripeln der Graphdatenbank einen direkten Zugriff auf diese Knoten-Kante-Paare bzw. Knoten-Kante-Knoten-Tripel ermöglicht,
S3) für den Fall, dass eine Aktualisierung eines in dem Datenbankindex berücksichtigten Knoten-Kante-Paares bzw. Knoten-Kante-Knoten-Tripels der Graphdatenbank erforderlich ist, weil eine Änderung zugehöriger Daten des Automatisierungssystems, insbesondere wenigstens eines bevorzugt von dem Datenlieferanten gelieferten Prozesswertes des Automatisierungssystems, auftrat, unter Verwendung des Datenbankindexes eine direkte Referenz auf das Knoten-Kante-Paar bzw. Knoten-Kante-Knoten-Tripel erhalten und dieses aktualisiert wird.

Die Erfindung betrifft auch ein Suchverfahren zur Ermittlung von Daten eines Automatisierungssystems, bei dem
- eine Graphdatenbank bereitgestellt wird, die unter Durchführung des Verfahrens nach einem der vorhergehenden Ansprüche aktualisiert wird,
- unter Verwendung einer für Graphdatenbanken vorgesehen Abfragesprache, insbesondere unter Verwendung von SPARQL, eine Suchabfrage an die Graphdatenbank gerichtet wird,
- ein die Parameter der Suchabfrage erfüllendes, Daten des Automatisierungssystems umfassendes Abfrageergebnis ausgegeben wird.

Es sei angemerkt, dass insbesondere im Falle von RDF in der Regel von Knoten-Kante-Knoten-Tripeln mit Subjekt, Prädikat und Objekt gesprochen wird. Bei LPG beispielsweise spricht man hingegen im Zusammenhang mit den Knoten und Kanten des wenigstens einen Graphen nicht von Tripeln. Insbesondere in Bezug auf LPG wird vorliegend auf Knoten-Kante-Paare abgestellt.

Weiterhin sei betont, dass die vorgenannten Verfahrensschritte nicht zwingend in der genannten Reihenfolge durchlaufen werden müssen.

Die Suchanfrage ist üblicherweise Bestandteil eines Verfahrens für den Zugriff auf Daten einer industriellen Automatisierungskomponente eines Automatisierungssystems, beispielsweise einer speicherprogrammierbaren Steuerung (PLC - Programmable Logic Controller), einer PC-basierten Steuerung oder dergleichen, in der wesentliche Automatisierungs- oder Prozessparameter, insbesondere ein sog. Prozessabbild (Gesamtheit der Zustandsinformationen von Eingangs- und Ausgangsschnittstellen), in einer graphbasierten Datenhaltung gespeichert sind. Der Austausch solcher Daten geschieht oft mittels proprietärer Protokolle oder OPC UA. Insbesondere werden auf die Daten lesend oder schreibend durch Bedien- und Beobachtungsgeräte (HMI - Human Machine Interface) oder industrielle Edge-Geräte zugegriffen, beispielsweise zur Weiterverarbeitung oder zur Einbindung in externe Steuer- und Regelungsapplikationen. Diese Zugriffe werden durch das vorgestellte Verfahren wesentlich performanter, was es bei den üblicherweise zyklusgesteuerten Automatisierungsanwendungen bedeutet, dass der Datenaustausch mit den externen Applikationen auch in Szenarien mit kurzen Zykluszeiten realisiert werden kann.

Die vorliegende Erfindung basiert also auf der Erkenntnis, dass auch Aktual-Werte eines Automatisierungssystems, mit denen zyklische bzw. häufige Änderungen einhergehen, in einer Graphdatenbank berücksichtigt werden können, wenn die Suche nach dem zugehörigen Knoten-Kante-Paar bzw. Knoten-Kante-Knoten-Tripel, in welchem der Wert hinterlegt ist, bzw. welches den Wert einer Variable oder ähnlichem zuweist, entfällt und auf das entsprechende Paar bzw. Tripel direkt zugegriffen werden kann. Dies wird erfindungsgemäß unter Bereitstellung und Nutzung eines geeigneten Datenbankindexes möglich.

Im Falle einer RDF-Graphdatenbank beispielsweise können Prozesswerte (als Subjekt) jeweils über ein bestimmtes Prädikat einer wohldefinierten Variable - beispielsweise ein symbolischer Name, im Tripel als Objekt - zugeordnet sein bzw. werden. Geht man z.B. von einem Tag mit dem eindeutigen Namen "Drehzahl" aus, welches aktuell den Werte "500" besitzt, so könnte das zugehörige Tripel im Graphen lauten: ("Drehzahl", hasValue, "500"). Dieses Tripel würde sich an irgendeiner Stelle eines beliebig komplexen Graphen, der z.B. eine Automatisierungs-Zelle, -Linie oder auch komplette Produktionsanlage repräsentiert, befinden. Damit die aufwendige Suche nach dem Tripel entfallen kann, ist erfindungsgemäß ein direkter Zugriff auf das Tripel möglich. Dies über den Datenbankindex, der es erlaubt, insbesondere für einen eindeutigen Variablennamen, direkt eine Referenz auf das entsprechende Tripel, welches wiederum die Zuordnung des Prozesswertes darstellt, zu erlangen. Die zeitaufwendige Suche unter Nutzung des für RDF vorgesehen Mechanismus für Änderungen/Aktualisierungen entfällt.

Es hat sich gezeigt, dass ohne die Erfindung nur einige wenige Variablen kontinuierlich jede Sekunde in einer Graphdatenbank aktualisiert werden können, insbesondere nur etwa 20, mit der Erfindung hingegen deutlich mehr, insbesondere mehr als 1000. So wird es erstmals möglich, dass neben z.B. reinen Typ- und Modell-Informationen eines industriellen Automatisierungssystems auch sich im Betrieb dynamisch ändernde Größen, wie veränderliche Prozesswerte, in geeigneter Anzahl bei Abfragen berücksichtigt werden können. Die Graphdatenbank kann dabei nur ein teilweises oder auch ein vollständiges Prozessabbild halten.

Zweckmäßiger Weise betrifft der Datenbankindex daher Knoten-Kante-Paare bzw. Knoten-Kante-Knoten-Tripel für sich dynamisch verändernde Daten des Automatisierungssystems. Der Index ist mit anderen Worten derart ausgestaltet, dass über diesen ein direkter Zugriff auf solche Knoten-Kante-Paare bzw. Knoten-Kante-Knoten-Tripel möglich ist, in denen bzw. über die sich dynamisch verändernde Automatisierungsdaten gespeichert sind. Beispielhaft für sich dynamisch, insbesondere zyklisch bzw. häufig, zum Beispiel alle paar Millisekunden, Sekunden oder Minuten, ändernde Daten, seien im regulären Betrieb messtechnisch überwachte Größen bzw. Werte genannt. Es kann sich u.a. um Messwerte wie die Temperatur, den Druck, die Geschwindigkeit etc. handeln.

Der Datenbankindex kann für den direkten Zugriff Referenzen auf Knoten-Kante-Paare bzw. Knoten-Kante-Knoten-Tripel für sich dynamisch verändernde Daten des Automatisierungssystems aufweisen.

Es kann vorgesehen sein, dass in dem Datenbankindex Knoten-Kante-Paare bzw. Knoten-Kante-Knoten-Tripel berücksichtigt sind, die ein "hasValue"-Prädikat verwenden. Der Datenbankindex kann insbesondere Referenzen auf Knoten-Kante-Paare bzw. Knoten-Kante-Knoten-Tripel, die das "hasValue"-Prädikat verwenden, umfassen.

Das erfindungsgemäße Verfahren hat sich als ganz besonders geeignet erwiesen, wenn sich in einem Automatisierungssystem jede Sekunde eine Vielzahl, etwa mindestens 100, bevorzugt mindestens 200, besonders bevorzugt mindestens 1000 (Prozess)Werte ändern und in einer zugehörigen Graphdatenbank aktualisiert werden sollen, um dort bei Abfragen unter Nutzung insbesondere standardisierter Abfragetools Berücksichtigung zu finden. Bei dem erfindungsgemäßen Verfahren zum Breitstellen von Daten kann daher vorgesehen sein, dass pro Sekunde mindestens 100, bevorzugt mindestens 200, besonders bevorzugt mindestens 1000 Aktualisierungen gemäß Schritt S3 unter Nutzung des Datenbankindexes in der Graphdatenbank durchgeführt werden.

Unter Daten eines Automatisierungssystems sind grundsätzlich sämtliche Daten zu verstehen, die im Zusammenhang mit einem solchen System stehen, insbesondere für ein solches System vorliegen und in einem solchen System anfallen, u.a. während des Betriebs. Es sei angemerkt, dass anstelle von Daten auch synonym von Informationen gesprochen werden kann und anstelle von einem Datenmodell synonym von einem Informationsmodell. Die Daten können neben sich dynamisch, insbesondere zyklisch bzw. häufig, etwa wenigstens eine mal je Sekunde ändernden Daten, auch solche zur Spezifikation des Systems bzw. von Komponenten, die Bestandteil des Systems bzw. mit diesem verbunden sind, umfassen. Beispielhaft für Daten (eher) statischer Natur seien Typen- bzw. Modellbezeichnungen von Komponenten, z.B. Motoren, genannt. Auch solche Daten, die sich in der Regel nicht oder nur selten beispielsweise aufgrund einer Reparatur bzw. eines Upgrades ändern, in der Graphdatenbank für Abfragen bereitstehen. Diese bzw. die zugehörigen Knoten-Kante-Paare bzw. Knoten-Kante-Knoten-Tripel müssen dann nicht in dem erfindungsgemäß vorgesehenen Datenbankindex berücksichtigt sein. Für diese Daten kann eine Aktualisierung auf konventionellem, jeweils eine Suche des betreffenden Paares bzw. Tripels einschließenden Wege ausreichen und erfolgen, etwa unter Nutzung des Zugriffs über Query-Interfaces. Es ist jedoch auch nicht ausgeschlossen, dass Daten solcher Art ebenfalls im Index berücksichtigt sind und auf die erfindungsgemäße Weise aktualisiert werden.

In bevorzugter Weiterbildung ist vorgesehen, dass die Aktualisierung in Schritt S3 einschließt, dass das bestehende Knoten-Kante-Paar bzw. Knoten-Kante-Knoten-Tripel entfernt und ein neues Knoten-Kante-Paar bzw. Knoten-Kante-Knoten-Tripel hinzugefügt wird. Bevorzugt, insbesondere für den Fall, dass die Graphdatenbank als RDF-Datenbank ausgebildet ist bzw. eine solche umfasst, wird nach dem Entfernen des bestehenden Paares bzw. Tripels und vor dem Hinzufügen des neuen Paares bzw. Tripels ein neues Subjekt erzeugt. Graphdatenbank erlauben in der Regel keine direkte Aktualisierung von gespeicherten Daten, sondern es sind die genannten Teilschritte, also ein Entfernen, ggf. Erzeugen eines neuen Subjektes und erneutes Hinzufügen betreffenden Knoten und Kanten, bei RDF eines entsprechenden Tripels, erforderlich. Insbesondere bei RDF wird auch ein neues Subjekt für den Wert erzeugt, der sich geändert hat und entsprechend aktualisiert werden muss. Hätte sich bei dem obigen Beispiel ("Drehzahl", hasValue, "500") die Drehzahl auf den Wert "651" geändert, würde ein neues Subjekt für den Wert ("651") erzeugt.

In weiterer bevorzugter Ausgestaltung erfolgen die genannten Teilschritte, also das Entfernen des bestehenden Paares bzw. Tripels, optional das Erzeugen des neuen Subjektes und Hinzufügen des neuen Paares bzw. Tripels atomar in einer Aktion. Dann ist gewährleistet, dass es zu keinem Zeitpunkt keinen oder gleichzeitig den alten und neuen, also zwei Werte gibt.

Das neue Knoten-Kante-Paar bzw. Knoten-Kante-Knoten-Tripel bzw. eine neue Referenz auf das neue Knoten-Kante-Paar bzw. neue Knoten-Kante-Knoten-Tripel wird zweckmäßiger Weise in dem Datenbankindex hinterlegt. So können erneute Aktualisierungen auf die erfindungsgemäße Weise erfolgen. Das alte Knoten-Kante-Paar bzw. Knoten-Kante-Knoten-Tripel bzw. eine zugehörige Referenz im Index wird ferner zweckmäßiger Weise gelöscht, um den Index "aufzuräumen".

Der erfindungsgemäß genutzte Datenbankindex kann als Schlüssel-Wert-Datenbankindex ausgebildet sein, man kann auch von einem Key-Value-Index sprechen. Der Index umfasst dann in an sich bekannter Weise eine Mehrzahl von Schlüsseln/Keys und zugehörigen Werten/Values.

Der jeweilige Schlüssel/Key stellt zweckmäßiger Weise ein eindeutiges Identifikationsmerkmal dar. Er kann insbesondere eindeutige Adressierungsinformationen für die betreffenden Daten, die auf die erfindungsgemäße Weise aktualisierbar sein sollen, umfassen bzw. dadurch gegeben sein. Die Adressierungsinformationen entsprechen zweckmäßiger Weise denjenigen, die seitens des Datenlieferanten für die betreffenden Daten verwendet werden. Sie können z.B. durch eindeutige Bezeichnungen bzw., insbesondere im Falle eines OPC UA Datenlieferanten, eine Kombination aus Namensraum (englisch: Namespace) und Node-ID gegeben sein. Die Werte/Values des Indexes sind bevorzugt jeweils durch eine Referenz, mit anderen Worten einen Zeiger, auf ein Knoten-Kante-Paar bzw. ein Knoten-Kante-Knoten-Tripel der Graphdatenbank gegeben oder umfassen eine solche, konkret eine Referenz auf dasjenige Paar bzw. Tripel, welches zu den Daten, insbesondere dem Wert, gemäß dem jeweiligen Schlüssel gehört.

Der Datenbankindex erlaubt insbesondere, ebenfalls basierend auf Namensraum und Node-ID im Index nachzuschlagen anstatt im Graphen zu suchen.

Der Datenbankindex kann auch zweistufig ausgebildet sein. Beispielhaft sei ein Dictionary von Namensräumen verweisend auf weitere Dictionaries pro Namensraum, in denen wiederum Node-IDs auf die Referenzen zugehöriger Knoten-Kante-Paare bzw. Knoten-Kante-Knoten-Tripel für die Daten bzw. Werte verweisen, genannt.

Der Datenlieferanten kann wenigstens eine Daten erfassende Komponente des Automatisierungssystems umfassen oder durch eine solche gegeben sein. Der Datenlieferant kann wenigstens ein SCADA-System und/oder wenigstens einen Daten-Aggregator umfassen oder dadurch gegeben sein.

Der Datenlieferant kann ferner auf OPC UA basieren bzw. OPC UA nutzen. Er kann entsprechend wenigstens einen OPC UA Server des Automatisierungssystems umfassen oder dadurch gegeben sein.

Mit OPC UA (Open Platform Communication Unified Architecture) ist ein industrielles Standardprotokoll der OPC Foundation für die herstellerunabhängige Kommunikation zum Austausch von industriellen Daten, insbesondere in der Prozessautomatisierung, geschaffen worden. Die OPC UA Specification ist erhältlich unter https://reference.opcfoundation.org/.

In besonders vorteilhafter Weiterbildung folgt die Benamung von Knoten, insbesondere von Objekten darstellenden Knoten, der Graphdatenbank einem von dem Datenlieferanten genutzten Adressierungsschema. Wenn der Datenlieferant OPC UA nutzt, z.B. ein OPC UA Server ist, folgt die Benamung von Knoten, insbesondere von Objekten darstellenden Knoten, der Graphdatenbank entsprechend bevorzugt dem OPC UA Adressierungsschema. Knoten der Graphdatenbank, insbesondere Objekte bildende Knoten, können dann jeweils durch den OPC UA Namensraum und eine Node-ID eindeutig identifizierbar sein. Dies erlaubt eine direkte Abbildung von OPC UA in z.B. RDF.

Der Graph der Graphdatenbank kann auch eine Abbildung des gesamten OPC UA Adressraums des Automatisierungssystems darstellen, welcher insbesondere eine Zelle, Linie, Anlage oder andere Struktur widerspiegelt.

Eine weitere besonders vorteilhafte Ausführungsform zeichnet sich ferner dadurch aus, dass die Graphdatenbank als sich im selben Applikations-Prozess wie der Datenlieferant befindende In-Process und/oder In-Memory Datenbank implementiert ist. Durch eine In-Process/In-Memory Kollokation kann ein besonders performanter Zugriff ermöglicht werden. Durch eine Kollokation Der Graphdatenbank mit dem Datenlieferanten im selben Applikations-Prozess ist sichergestellt, dass eine direkte Aktualisierung von Knoten-Kanten-Paaren bzw. Knoten-Kanten-Knoten-Tripeln ohne Umweg erfolgen kann.

Der Datenbankindex kann sowohl zum Zeitpunkt der Erzeugung der Graphdatenbank erstellt werden bzw. worden sein, als auch nach deren Erstellung. Der Index kann z.B. "on-the-fly" erzeugt werden, etwa, wenn der Graph bzw. die Graphdatenbank programmatisch erzeugt wird. Es kann auch ein erstmaliges "Einsammeln" von Knoten-Kante-Paaren bzw. Knoten-Kante-Knoten-Tripeln insbesondere dynamisch veränderlicher Daten erfolgen. Beispielweise können alle Paare bzw. Tripel, die das "hasValue"-Prädikat verwenden, "eingesammelt" und in dem Index berücksichtigt werden. Dies kann erfolgen, nachdem ein Graph in Form einer zuvor serialisierten Darstellung am Stück eingelesen wird, etwa bei einem cold-start des Systems.

In besonders vorteilhafter Ausgestaltung wird von dem Datenlieferanten mitgeteilt, wenn sich Daten ändern und/oder werden von dem Datenlieferanten geänderte Daten übermittelt und es findet jeweils ein Abgleich statt, ob die gemeldeten und/oder übermittelten geänderten Daten in dem Datenbankindex berücksichtigt sind.

Die Graphdatenbank umfasst zweckmäßiger Weise eine Abfragelogik ("Query-Engine"). Wenn es sich um eine RDF-Graphdatenbank handelt, ist die Query-Engine bevorzugt durch SPARQL gegeben.

Ein weiterer Gegenstand der vorliegenden Erfindung ist ein Computerprogramm, das Programmcodemittel umfasst, die, wenn sie auf wenigstens einem Computer ausgeführt werden, den wenigstens einen Computer veranlassen, die Schritte des erfindungsgemäßen Verfahrens zur Bereitstellung von Daten und/oder des erfindungsgemäßen Suchverfahrens durchzuführen.

Gegenstand der Erfindung ist auch ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Bereitstellung von Daten und/oder des erfindungsgemäßen Suchverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Schließlich betrifft die Erfindung eine Vorrichtung zur Datenverarbeitung, umfassend
- einen Prozessor,
- eine Datenspeichervorrichtung, auf der computerausführbarer Programmcode gespeichert ist, der, wenn er von dem Prozessor ausgeführt wird, diesen veranlasst, die Schritte des erfindungsgemäßen Verfahrens zur Bereitstellung von Daten und/oder des erfindungsgemäßen Suchverfahrens durchzuführen.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- Figur 1: eine rein schematische Darstellung eines Abschnitts des Graphen einer Graphdatenbank,
- Figur 2: eine rein schematische Darstellung zum Ablauf eines Ausführungsbeispiels des erfindungsgemäßen Verfahrens zum Bereitstellen von Daten und des erfindungsgemäßen Suchverfahrens, und
- Figur 3: eine rein schematische Darstellung mehrerer OPC-Knoten, eines Datenbankindexes und mehrere Tripel einer RDF-Graphdatenbank.

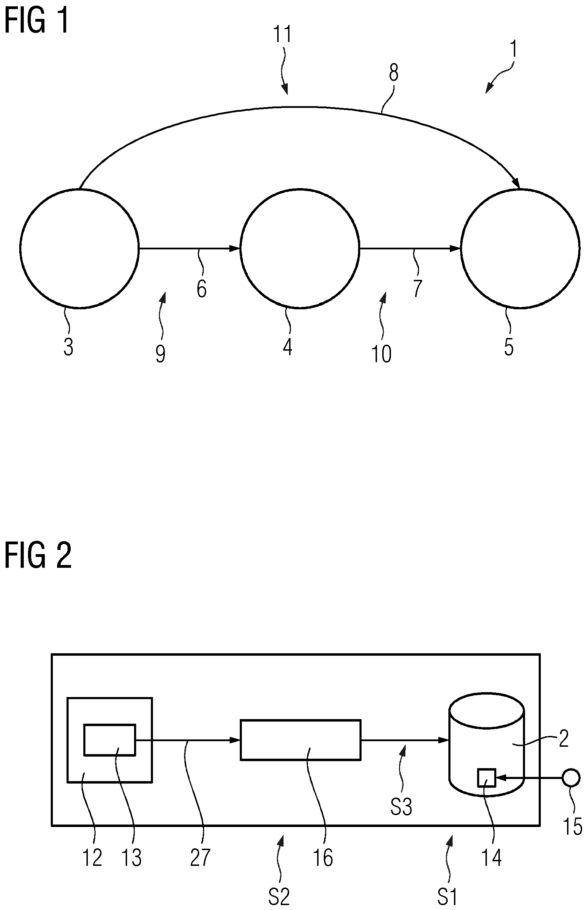

Die Figur 1 zeigt in stark vereinfachter Darstellung einen Abschnitt eines Graphen 1 einer RDF-Graphdatenbank 2 (nur in Figur 2 schematisch dargestellt), wobei beispielhaft drei Knoten 3-5 und drei Kanten 6-8 des Graphen 1 dargestellt sind. Die gezeigten Knoten 3-5 und Kanten 6-8 bilden drei Knoten-Kante-Knoten-Tripel 9-11. Das Tripel 9 umfasst die Knoten 3 und 4 sowie die Kante 6, das Tripel 10 die Knoten 4 und 5 sowie die Kante 7 und das Tripel 11 die Knoten 3 und 5 sowie die Kante 8. Jedes Tripel umfasst in vorbekannter Weise ein Subjekt, ein Prädikat und ein Objekt. Die Prädikate sind durch die Kanten 6-8 gegeben. Der Knoten 3 ist das Subjekt und der Knoten 4 das Objekt von Tripel 9. Der Knoten 4 ist das Subjekt und der Knoten 5 das Objekt von Tripel 10. Der Knoten 3 ist das Subjekt und der Knoten 5 das Objekt von Tripel 11.

Die Knoten 3-5 können Daten bzw. Informationen verschiedenster Art darstellen. Rein beispielhaft sei genannt, dass die Knoten 3-5 drei Personen (z.B. Person A, Person B, Person C, siehe oben) repräsentieren und die Kanten 6-8 zugehörige Beziehungen, z.B. "kennt".

In einem solchen Knoten 3-5 und Kanten 6-8 aufweisenden Graphen 1 einer Graphdatenbank 2 können alternativ auch Daten eines industriellen Automatisierungssystems 12 (vgl. Figur 2) gespeichert sein bzw. werden, beispielsweise Modell- bzw. Typenbezeichnungen der Komponenten eines Automatisierungssystems 12 sowie sich im Betrieb dynamisch ändernde Prozesswerte, beispielsweise ein teilweises oder auch vollständiges Prozessabbild. Hiervon wird im Folgenden ausgegangen.

Die Daten das Automatisierungssystems 12 können dabei von einem Datenlieferanten 13 des Systems 12 geliefert werden. Bei diesem kann es sich beispielsweise um ein SCADA-System oder einen Daten-Aggregator oder einen OPC UA Server des Automatisierungssystems 12 handeln. Vorliegend ist der Datenlieferant durch einen OPC UA Server 13 gegeben.

Das Speichern der vom OPC UA Server 13 gelieferten Daten des Automatisierungssystems 12 in der Graphdatenbank 2 stellt einen ersten Schritt S1 eines Ausführungsbeispiels des erfindungsgemäßen Verfahrens zum Bereitstellen von Daten eines Automatisierungssystems 12 für Suchabfragen dar.

Graphdatenbanken können über bestimmte Schnittstellen abgefragt (vgl. oben erwähntes Schlussfolgern) oder manipuliert (sprich Knoten 3-5 hinzugefügt oder entfernt) werden. Ein Beispiel für eine solche standardisierte Schnittstelle ist SPARQL, welche eine Abfragesprache für RDF-Graphdatenbanken 2 ist. In der Figur 2 sind schematisch eine SPARQL-Engine 14 der Graphdatenbank 2 und ein SPARQL-Endpoint 15 dargestellt, über den Nutzer Abfragen an die Graphdatenbank 2 richten können.

Dabei werden über Abfragen Schlussfolgerungen getroffen (indem sozusagen eine Query/Suche ausgeführt wird), auf deren Ergebnis dann erst zur Änderung ausgeführt wird. Da mit der konventionellen Aktualisierung von Werten somit implizit immer eine Suche nach den entsprechenden, zu dem jeweiligen Wert gehörenden Tripel 9-11 einhergeht, ist das konventionelle Aktualisieren von Werten in einer RDF-Graphdatenbank langsam. Während dies für eher statische Daten, wie etwa Typen- bzw. Modellbezeichnungen von Komponenten des Automatisierungssystems 12, unproblematisch ist, gilt dies nicht für ein Prozessabbild, welches in der Regel eine Vielzahl von sich dynamisch ändernden Aktual-Werten umfasst. Wenn hier jeweils aktuelle Werte bei Abfragen berücksichtigbar sein sollen, ist eine zügige Aktualisierung erforderlich.

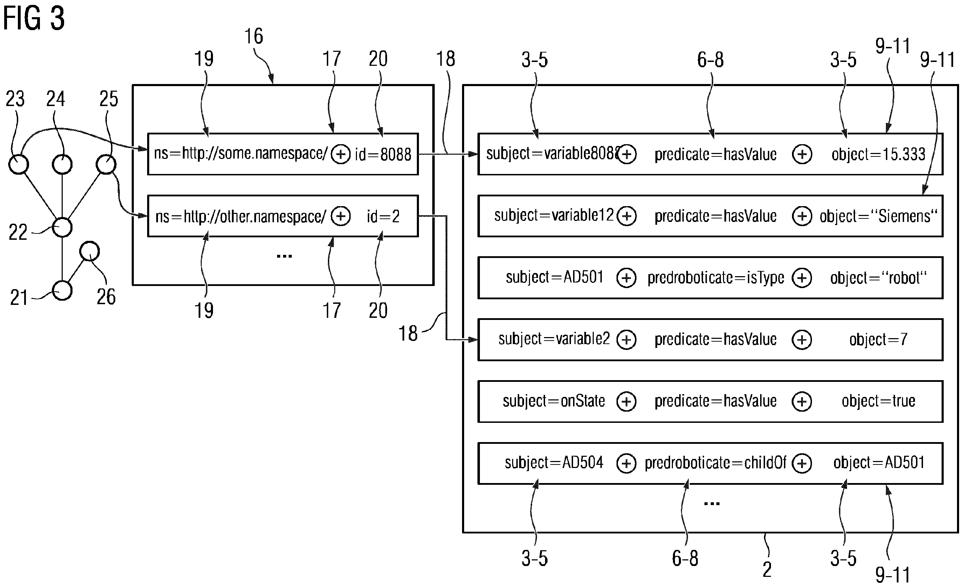

Hierfür wird in Schritt S2 ein Datenbankindex 16 (vgl. die Figuren 2 und 3) bereitgestellt, der zumindest für einen Teil von Knoten-Kante-Knoten-Tripeln 9-11 der RDF-Graphdatenbank 2 einen direkten Zugriff auf diese Knoten-Kante-Knoten-Tripel 9-11 ermöglicht. Konkret betrifft der Datenbankindex 16 diejenigen Knoten-Kante-Knoten-Tripel 9-11 der RDF-Graphdatenbank 2, die zu sich dynamisch verändernden Daten des Automatisierungssystems 12 gehören. Hier sind dieses Werte in Knoten 3-5 der betreffenden Tripel 9-11 gespeichert und zwar in Objekten bildenden Knoten 3-5. Diese Tripel 9-11 haben alle das Prädikat "hasValue" als Kante 6-8. Beispielhaft für ein solches Tripel 9-11 sei genannt: ("Drehzahl", hasValue, "500"). Bei bzw. nach der programmatischen Erzeugung der RDF-Graphdatenbank 2 sind alle Tripel 9-11, die dieses Prädikat verwenden, "eingesammelt" worden, um sie in dem Datenbankindex 16 zu berücksichtigen.

Der Datenbankindex 16 ist bei dem hier beschriebenen Ausführungsbeispiel als Schlüssel-Wert-Index ausgebildet. Er umfasst - für jedes Tripel 9-11 mit dem "hasValue"-Prädikat - ein Paar aus Schlüssel 17 und Wert 18. Der Schlüssel 17 ist jeweils durch eine eindeutige Bezeichnung bzw. durch eindeutige Adressierungsinformationen gegeben, und zwar diejenigen eindeutigen Adressierungsinformationen, die der Datenlieferant 13 für die betreffenden, sich dynamisch verändernden Prozesswerte nutzt. Bei dem Datenlieferanten 13 handelt es sich, wie angemerkt, um einen OPC UA Server. Jeder Schlüssel 17 des Datenbankindexes ist daher durch eine Kombination von Namenspace 19 und Node-ID 20 gegeben, wobei dies beispielhaft zu verstehen ist. In der schematischen Figur 3 sind Namespace 19 und Node-ID 20 jeweils durch ein Pluszeichen verbunden, um zu verdeutlichen, dass beide gemeinsam den Schlüssel 17 bilden. Es sei angemerkt, dass in der Figur 3 aus Gründen der Übersichtlichkeit beispielhaft nur zwei Schlüssel 17 nebst zugehörigen Werten 18 gezeigt sind. Der Datenbankindex 16 wird in der Regel deutlich mehr als zwei dynamisch veränderliche Prozesswerte berücksichtigen und somit deutlich mehr Schlüssel-Wert-Paare umfassen, was in der Figur durch "..." angedeutet ist.

Die Werte 18 des Datenbankindexes 16 sind hier durch Referenzen, mit anderen Worten Zeiger auf diejenigen Knoten-Kante-Knoten-Tripel 9-11 der Graphdatenbank 2 gegeben, in deren Objekten die entsprechenden Werte in der Graphdatenbank 2 gespeichert sind. Die Werte 18 sind in der Figur 3 entsprechend durch Pfeile visualisiert, die jeweils auf das entsprechende Tripel 9-11 der Graphdatenbank 2 zeigen. Neben diesen beiden Tripeln 9-11 sind in der Figur 3 rechts beispielhaft weitere Tripel 9-11 schematisch dargestellt. Es sei angemerkt, dass auch weitere Tripel 9-11 mit "hasValue"-Prädikat enthalten sind. Diese sind ebenfalls im Datenbankindex 16 berücksichtigt, die zugehörigen Paare aus Schlüssel 17 und Wert 18 jedoch - allein aus Gründen der Übersichtlichkeit - nicht zusätzlich im Datenbankindex 16 dargestellt.

Links des Datenbankindexes 16 sind - rein schematisch - Knoten 21-26, konkret Objekt-Knoten und Variablen-Knoten, des den Datenlieferanten bildenden OPC UA Servers 13 dargestellt. Der Objekt-Knoten 21 repräsentiert dabei eine Roboterzelle, der Objekt-Knoten 22 einen bestimmten Roboter der Zelle, der Variablen-Knoten 23 eine Spannung des Roboters, der Variablen-Knoten 24 eine Herstellerangabe des Roboters, der Variablen-Knoten 25 einen Winkel (in Grad) des Roboters und der Variablen-Knoten 26 einen Zustand der Roboterzelle. Von den beispielhaft dargestellten Knoten 21-26 sind in dem Datenbankindex 26 nur die Variablen-Knoten 23 und 25 für die Spannung und den Winkel berücksichtigt, was in der Figur dadurch dargestellt ist, dass von diesen jeweils ein Pfeil auf einen Eintrag mit Schlüssel 17 und Wert 18 zeigt. Diese Werte ändern sich im Betrieb dynamisch. Sie werden zyklisch erfasst und die jeweils aktuellen Werte werden von dem OPC UA Server 13 bereitgestellt bzw. übermittelt.

Die Herstellerangabe gemäß Variablen-Knoten 24 stellt eine statische Größe dar, die sich nicht oder nur selten, etwa aufgrund eines defektbedingten Austausches, ändern wird. Gleiches gilt für den Variablen-Knoten für den Zustand. Diese sind daher nicht in dem Datenbankindex 16 berücksichtigt. Gleiches gilt für die Objekt-Knoten 21 und 22.

Bei dem hier beschriebenen Ausführungsbeispiel folgt die Benamung der Objekte darstellenden Knoten 3-5 der Tripel 9-11 der Graphdatenbank 2 dem OPC UA Adressierungsschema folgt. Konkret sind diese jeweils durch den OPC UA Namensraum und eine Node-ID eindeutig identifizierbar. Der Graph 1 stellt bevorzugt eine Abbildung des gesamten OPC UA Adressraums des OPC UA Servers 13 des Automatisierungssystems 12 dar.

Die Graphdatenbank 2 ist hier ferner als eine In-Memory/In-Process Datenbank ausgebildet, die sich im selben Applikations-Prozess befindet, wie der den Datenlieferant 13 bildende OPC UA Server 13. Durch die Kollokation, die in Figur 2 durch den den OPC UA Server 13 und die Graphdatenbank 2 einfassenden Rahmen dargestellt ist, wird ein besonders performanter Zugriff möglich.

Gemäß Schritt S3 (vgl. Figur 2) wird für den Fall, dass eine Aktualisierung eines in dem Datenbankindex 16 berücksichtigten Knoten-Kante-Knoten-Tripels 9-11 der Graphdatenbank 2 erforderlich ist, weil eine Änderung zugehöriger Daten des Automatisierungssystems 12, konkret wenigstens eines von dem Datenlieferanten 13 gelieferten Prozesswertes des Automatisierungssystems 12, auftrat, unter Verwendung des Datenbankindexes 16 eine direkte Referenz auf das. Knoten-Kante-Knoten-Tripel 9-11 erhalten und dieses aktualisiert.

Konkret erfolgt ein Lookup 27, ob der geänderte Wert, zu dem gemäß Adressierungsschema des OPC UA Datenlieferanten 13 ein Namespace und eine Node-ID gehören, in dem Datenbankindex 16 berücksichtigt ist. Mit anderen Worten wird im Index basierend auf dem Namespace und Node-ID gemäß Datenlieferant "nachgeschlagen", anstatt im Graphen nach dem zugehörigen Tripel 9-11 zu suchen. Wenn der Wert in dem Datenbankindex 16 berücksichtigt ist, für diesen also ein Schlüssel 17 mit entsprechendem Namespace 19 und Node-ID 20 hinterlegt ist, wird die durch den Wert 18 gegeben Referenz auf das zugehörige Knoten-Kante-Knoten-Tripel 9-11 der Graphdatenbank 2, in dessen das Objekt bildenden Knoten 3-5 der betreffende, zu aktualisierende Wert (z.B. "500") hinterlegt ist, erhalten und das Tripel 9-11 aktualisiert.

Die Aktualisierung erfolgt dabei in mehreren Teilschritten, nämlich:
1) entfernen des aktuellen Knoten-Kante-Knoten-Tripels 9-11,
2) erzeugen eines neuen Subjekts für den neuen Wert (z.B. "651"),
3) Hinzufügen eines neuen Knoten-Kante-Knoten-Tripels 9-11 (z.B. "Drehzahl", "hasValue", "651")

Diese Teilschritte erfolgen dabei atomar in einer Aktion. Dann ist gewährleistet, dass es zu keinem Zeitpunkt keinen oder gleichzeitig den alten und neuen, also zwei Werte gibt.

Nach der Aktualisierung wird eine neue Referenz auf das neue Knoten-Kante-Knoten-Tripel 9-11 in dem Datenbankindex 16 für die betreffende Variable hinterlegt.

Es hat sich gezeigt, dass ohne die erfindungsgemäße Vorgehensweise nur einige wenige Variablen kontinuierlich jede Sekunde in einer Graphdatenbank aktualisiert werden können, insbesondere nur etwa 20. Auf die vorstehend beschrieben Weise können deutlich mehr, insbesondere mehr als 1000 Variablen pro Sekunde in der Graphdatenbank 2 unter Nutzung des Datenbankindexes 16 aktualisiert werden. So wird es erstmals möglich, dass neben z.B. reinen Typ- und Modell-Informationen eines industriellen Automatisierungssystems 12 auch sich im Betrieb dynamisch ändernde Größen, wie veränderliche Prozesswerte, bei Abfragen berücksichtigt werden können.

Bei einem Ausführungsbeispiel des erfindungsgemäßen Suchverfahrens zur Ermittlung von Daten des Automatisierungssystems 12 wird eine Graphdatenbank 2 bereitgestellt, die unter Durchführung des vorstehend beschriebenen Verfahrens aktualisiert wird. Es wird unter Verwendung einer für Graphdatenbanken 2 vorgesehen Abfragesprache, hier unter Verwendung der SPARQL-Engine 14 und Nutzung des SPARQL-Endpunktes 15 (vgl. Figur 2), eine Suchabfrage an die Graphdatenbank 2 gerichtet und ein die Parameter der Suchabfrage erfüllendes, Daten des Automatisierungssystems 12 umfassendes Abfrageergebnis ausgegeben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Bereitstellen von Daten eines Automatisierungssystems (12) für Suchabfragen, bei dem
S1) von einem Datenlieferanten (13), insbesondere wenigstens einem OPC UA Server, gelieferte Daten des Automatisierungssystems (12) in einer Graphdatenbank (2), insbesondere einer RDF- oder OWL- oder LPG-Graphdatenbank, gespeichert werden oder worden sind, wobei die Graphdatenbank (2) wenigstens einen Knoten (3-5) und Kanten (6-8) aufweisenden Graphen (1) umfasst,
S2) ein Datenbankindex (16) bereitgestellt wird, der zumindest für einen Teil von Knoten-Kante-Paaren bzw. Knoten-Kante-Knoten-Tripeln (9-11) der Graphdatenbank (2) einen direkten Zugriff auf diese Knoten-Kante-Paare bzw. Knoten-Kante-Knoten-Tripel (9-11) ermöglicht,
S3) für den Fall, dass eine Aktualisierung eines in dem Datenbankindex (16) berücksichtigten Knoten-Kante-Paares bzw. Knoten-Kante-Knoten-Tripels (9-11) der Graphdatenbank (2) erforderlich ist, weil eine Änderung zugehöriger Daten des Automatisierungssystems (12), insbesondere wenigstens eines bevorzugt von dem Datenlieferanten (13) gelieferten Prozesswertes des Automatisierungssystems (12), auftrat, unter Verwendung des Datenbankindexes (16) eine direkte Referenz auf das Knoten-Kante-Paar bzw. Knoten-Kante-Knoten-Tripel (9-11) erhalten und dieses aktualisiert wird.

2. Verfahren nach Anspruch 1,
**dadurch gekennzeichnet, dass**
der Datenbankindex (16) Knoten-Kante-Paare bzw. Knoten-Kante-Knoten-Tripel (9-11) für sich dynamisch verändernde Daten des Automatisierungssystems (12) betrifft, bevorzugt, dass der Datenbankindex (16) Referenzen (18) auf Knoten-Kante-Paare bzw. Knoten-Kante-Knoten-Tripel (9-11) für sich dynamisch verändernde Daten des Automatisierungssystems (12) aufweist.

3. Verfahren nach Anspruch 1 oder 2,
**dadurch gekennzeichnet, dass**
in dem Datenbankindex (16) Knoten-Kante-Paare bzw. Knoten-Kante-Knoten-Tripel (9-11) berücksichtigt sind, die das "hasValue"-Prädikat verwenden, bevorzugt, dass der Datenbankindex (16) Referenzen ((18) auf Knoten-Kante-Paare bzw. Knoten-Kante-Knoten-Tripel (9-11), die das "hasValue"-Prädikat verwenden, umfasst.

4. Verfahren nach einem der vorhergehenden Ansprüche,
**dadurch gekennzeichnet, dass**
der Datenbankindex (16) als Schlüssel-Wert-Datenbankindex ausgebildet ist, bevorzugt, wobei die Werte (18) durch Referenzen auf Knoten-Kanten-Paare bzw. Knoten-Kante-Knoten-Tripel (9-11) der Graphdatenbank (2) gegeben sind oder solche umfassen.

5. Verfahren nach einem der vorhergehenden Ansprüche,
**dadurch gekennzeichnet, dass**
die Aktualisierung in Schritt S3 einschließt, dass das bestehende Knoten-Kante-Paar bzw. Knoten-Kante-Knoten-Tripel (9-11) entfernt und ein neues Knoten-Kante-Paar bzw. Knoten-Kante-Knoten-Tripel (9-11) hinzugefügt wird, bevorzugt, wobei nach dem Entfernen des bestehenden Knoten-Kante-Paares bzw. Knoten-Kante-Knoten-Tripels (9-11) und vor dem Hinzufügen des neuen Knoten-Kante-Paares bzw. Knoten-Kante-Knoten-Tripels (9-11) ein neues Subjekt erzeugt wird.

6. Verfahren nach Anspruch 5,
**dadurch gekennzeichnet, dass**
das Entfernen des bestehenden Knoten-Kante-Paares bzw. Knoten-Kante-Knoten-Tripels (9-11) und Hinzufügen des neuen Knoten-Kante-Paares bzw. Knoten-Kante-Knoten-Tripels (9-11) und optional das Erzeugen des neuen Subjektes atomar in einer Aktion erfolgen.

7. Verfahren nach Anspruch 5 oder 6,
**dadurch gekennzeichnet, dass**
eine neue Referenz auf das neue Knoten-Kante-Paar bzw. das neue Knoten-Kante-Knoten-Tripel (9-11) in dem Datenbankindex (16) hinterlegt wird.

8. Verfahren nach einem der vorhergehenden Ansprüche,
**dadurch gekennzeichnet, dass**
der Datenlieferant (13) ein OPC UA Datenmodell nutzt, bevorzugt, dass der Datenlieferant (13) durch einen OPC UA Server des Automatisierungssystems (12)gegeben ist oder einen solchen umfasst.

9. Verfahren nach Anspruch 8,
**dadurch gekennzeichnet, dass**
die Benamung von Knoten (3-5), insbesondere von Objekten darstellenden Knoten (3-5), der Graphdatenbank (2) einem von dem Datenlieferanten (13) genutzten Adressierungsschema folgt.

10. Verfahren nach Anspruch 8 und 9,
**dadurch gekennzeichnet, dass**
die Benamung von Knoten (3-5), insbesondere von Objekten darstellenden Knoten (3-5), der Graphdatenbank (2) dem OPC UA Adressierungsschema folgt, insbesondere, wobei Objekte bildende Knoten (3-5) der Graphdatenbank (2) jeweils durch den OPC UA Namensraum und eine Node-ID eindeutig identifizierbar sind, bevorzugt, wobei der Graph (1) der Graphdatenbank (2) eine Abbildung des gesamten OPC UA Adressraums des Automatisierungssystems (12) darstellt.

11. Verfahren nach einem der vorhergehenden Ansprüche,
**dadurch gekennzeichnet, dass**
die Graphdatenbank (2) als sich im selben Applikations-Prozess wie der Datenlieferant (13) befindende In-Process und/oder In-Memory Datenbank implementiert ist.

12. Verfahren nach einem der vorhergehenden Ansprüche,
**dadurch gekennzeichnet, dass**
von dem Datenlieferanten (13) mitgeteilt wird, wenn sich Daten ändern und/oder dass der Datenlieferant (13) geänderte Daten übermittelt, und dass jeweils ein Abgleich stattfindet, ob die gemeldeten und/oder übermittelten geänderten Daten in dem Datenbankindex (16) berücksichtigt sind.

13. Suchverfahren zur Ermittlung von Daten eines Automatisierungssystems, bei dem
- eine Graphdatenbank (2) bereitgestellt wird, die unter Durchführung des Verfahrens nach einem der vorhergehenden Ansprüche aktualisiert wird,
- unter Verwendung einer für Graphdatenbanken (2) vorgesehen Abfragesprache, insbesondere unter Verwendung von SPARQL, eine Suchabfrage an die Graphdatenbank (2) gerichtet wird,
- ein die Parameter der Suchabfrage erfüllendes, Daten des Automatisierungssystems (12) umfassendes Abfrageergebnis ausgegeben wird.

14. Computerprogramm, umfassend Befehle, die, wenn sie auf wenigstens einem Computer ausgeführt werden, den wenigstens einen Computer veranlassen, die Schritte des Verfahrens nach einem der Ansprüche 1 bis 13 durchzuführen.

15. Computerlesbares Medium, umfassend Befehle, die, wenn sie auf wenigstens einem Computer ausgeführt werden, den wenigstens einen Computer veranlassen, die Schritte des Verfahrens nach einem der Ansprüche 1 bis 13 durchzuführen.

16. Vorrichtung zur Datenverarbeitung, umfassend
- einen Prozessor,
- eine Datenspeichervorrichtung, auf der computerausführbarer Programmcode gespeichert ist, der, wenn er von dem Prozessor ausgeführt wird, diesen veranlasst, die Schritte des Verfahrens nach einem der Ansprüche 1 bis 13 durchzuführen.
